# EUROPÄISCHE PATENTSCHRIFT

(11) **EP 1 632 413 B1**
(45) Veröffentlichungstag und Bekanntmachung des Hinweises auf die Patenterteilung: **20.12.2006**
(21) Anmeldenummer: 05018459.7
(22) Anmeldetag: 25.08.2005
(51) Int. Cl.: B60T 17/00

(54) **Lufttrocknereinheit als Teil einer Druckluftversorgungseinrichtung in einem Nutzfahrzeug, insbesondere Lastkraftwagen**
Air dryer unit as part of a compressed air supply device in a utility vehicle, especially a lorry
Dessiccateur d'air comme part d'une installation d'alimentation en air comprimé d'un véhicule utilitaire, notamment un camion

(30) Priorität: 03.09.2004 AT 14812004
(43) Veröffentlichungstag der Anmeldung: 08.03.2006
(73) Patentinhaber: MAN Nutzfahrzeuge Österreich AG, 4400 Steyr (AT)
(72) Erfinder: Adlassnig, Manfred, 4400 Steyr (AT); Hitzenberger, Karl, Ing., 4407 Steyr/Gleink (AT)

(56) Entgegenhaltungen:
- EP-A- 1 431 153
- WO-A-99/30947
- WO-A-20/04071836
- DE-A1- 1 555 165
- FR-A- 2 798 345

## Beschreibung

Die Erfindung bezieht sich auf eine Lufttrocknereinheit als Teil einer Druckluftversorgungseinrichtung in einem Nutzfahrzeug, insbesondere Lastkraftwagen, mit einem am Fahrgestellrahmen des Nutzfahrzeuges befestigten Lufttrockner, einem damit verbundenen Trockenluftbehälter und wenigstens einem Ventil, insbesondere einem Vierkreisschutzventil mit mindestens einem elektrisch-pneumatischen Schalter und mindestens einem Druckbegrenzungsventil, die als vormontierter Gesamtmodul über mindestens ein tragendes Element am Fahrgestellrahmen befestigbar ist.

Als Stand der Technik ist bereits ein Vorratsbehältermodul für einen Lufttrockner bekannt (WO 2004/071836 A1). Hier findet eine Lufttrocknereinheit Anwendung, mit einem Winkelelement zur Befestigung eines Lufttrockners an einem Fahrzeug. Über ein Befestigungsloch ist ein Vorratsbehälter mit einem Verteiler verbunden.

Diesem bekannten Stand der Technik ist nicht zu entnehmen, dass eine vertikale Grundplatte mehrere abgewinkelte Seitenplatten aufweist, die Befestigungsbereiche für Trockenluftbehälter, das Ventil und den Anschluss am Fahrgestell besitzt.

Eine Lufttrocknereinheit mit den Merkmalen des Oberbegriffes des Anspruchs 1 geht aus dem Dokument FR 2 798 345 A hervor.

Demgegenüber besteht die Aufgabe der vorliegenden Erfindung darin, eine Konstruktion für eine Lufttrocknereinheit zu schaffen, die mit ihren wesentlichen Bestandteilen vor Einbau im Fahrzeug modular vorgefertigt werden kann, und in einfacher Weise am Fahrgestellrahmen eines Nutzfahrzeuges, insbesondere Lastkraftwagens, zu befestigen ist.

Diese Aufgabe wird erfindungsgemäß dadurch gelöst, dass das tragende Element als einstückiges Winkelelement ausgebildet ist und eine im Wesentlichen vertikal und senkrecht zum Fahrgestellrahmen stehende ebene Grundplatte aufweist, an welcher mehrere abgewinkelte Seitenplatten mit den Befestigungsbereichen für den Lufttrockner, den Trockenluftbehälter, das Ventil und für den Anschluss am Fahrgestellrahmen angeordnet sind. Hierdurch ergibt sich vorteilhafterweise eine kompakte Baueinheit, welche das Gesamtmodul vormontierbar und bei der Endmontage als Einheit am Fahrgestellrahmen befestigbar ist. Bei den gesamten Anbauteilen handelt es sich vorzugsweise um handelsübliche Bauteile, die entweder direkt oder über geeignete Halterungen am Winkelelement zu befestigen sind. Das tragende Element, insbesondere Winkelelement ist für den Anbau dieser Bauteile entsprechend angepasst und vorbereitet. Vorzugsweise ist an der Grundplatte im oberen und unteren Bereich jeweils eine abgewinkelte Seitenplatte angeordnet, die wiederum einen abgewinkelten Flansch mit Befestigungslöchern zur Befestigung am Fahrgestellrahmen insbesondere über Schrauben-Muttern-Verbindungen aufweist.

In weiterer Ausgestaltung der Erfindung können der Lufttrockner und der Trockenluftbehälter beidseitig an der Grundplatte des Wirbelelementes über Befestigungslöcher und vorzugsweise Schrauben-Muttern-Verbindungen befestigt sein.

Die Grundplatte ist nach einem anderen vorteilhaften Merkmal der Erfindung so ausgebildet, dass an der den fahrgestellrahmenseitigen Flanschen abgekehrten Seite eine Seitenplatte vorhanden ist, mit einem abgewinkelten Flansch mit Befestigungslöchern zur Befestigung des Ventils vorzugsweise über Schrauben-Muttern-Verbindungen.

In alternativer Ausführung kann die Grundplatte zwischen den zur Befestigung am Fahrgestellrahmen dienenden Flanschen einen zusätzlichen Tragarm für eine weitere Ventilbefestigung aufweisen.

Die Grundplatte kann zur Gewichtsreduzierung mindestens eine Ausnehmung besitzen und vorzugsweise in Rechteckform gestaltet sein. Die Seitenplatten sind daran jeweils in Dreieckform ausgebildet und erstrecken sich nahezu über die gesamte Kantenlänge der jeweiligen Seitenkante der Grundplatte.

Die Erfindung wird nachfolgend anhand von in der Zeichnung dargestellten Ausführungsbeispielen näher beschrieben. In der Zeichnung zeigen:
- Fig.: 1 eine Seitenansicht einer an einem Fahrgestellrahmen befestigten Lufttrocknereinheit,
- Fig. 2: die Draufsicht der Anordnung nach Fig. 1,
- Fig.3: die perspektivische Ansicht der an einem Fahrgestellrahmen befestigten Lufttrocknereinheit gemäß Fig. 1 und 2,
- Fig. 4: eine perspektivische Ansicht eines einstückig ausgebildeten tragenden Elements, wie im Beispiel von Fig. 1 bis 3 verwendet,
- Fig.: 5 eine weitere Ausführungsform der an einem Fahrgestellrahmen befestigten Lufttrocknereinheit in Ansicht von Innen nach Außen (gemäß V in Fig. 6),
- Fig. 6: eine Draufsicht auf die Ausführungsform nach Fig. 5,
- Fig. 7: eine perspektivische Ansicht der Lufttrocknereinheit nach Fig. 5 und 6,
- Fig. 8: in Perspektivansicht das tragende Element zur Halterung der Lufttrocknereinheit nach Fig. 5 bis 7.

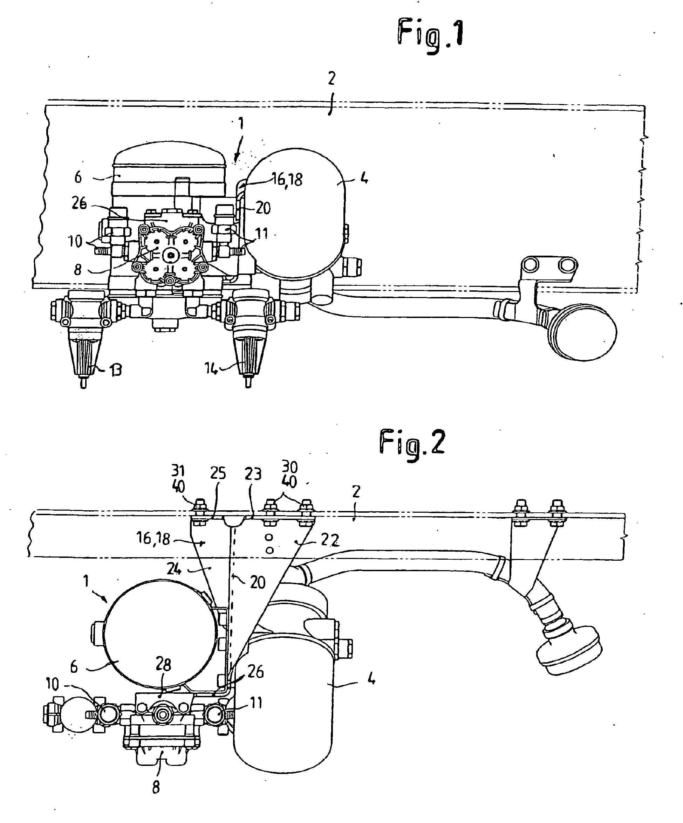

In den Fig. 1 bis 4 ist eine Lufttrocknereinheit 1 als Teil einer Druckluftversorgungseinrichtung in einem zweiachsigen Nutzfahrzeug mit angetriebener Hinterachse und nicht angetriebener Vorderachse dargestellt. Diese Lufttrocknereinheit 1 besteht im Wesentlichen aus einem Lufttrockner 4, einem Trockenluftbehälter 6, einem Vierkreisschutzventil 8, zwei elektrisch-pneumatischen Schaltern 10 und 11 und zwei Druckbegrenzungsventilen 13 und 14.

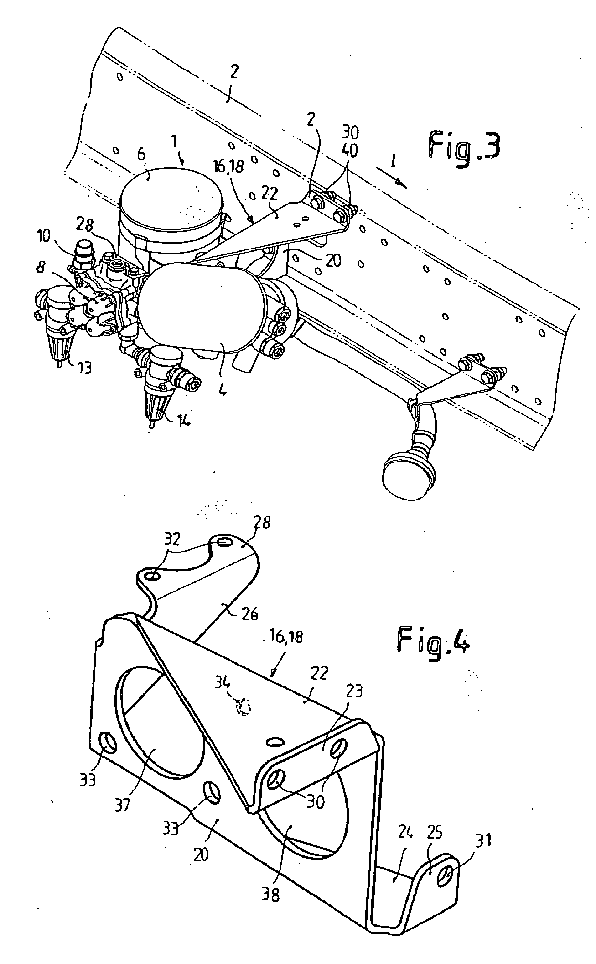

Diese Lufttrocknereinheit 1 ist als Gesamtmodul ausgebildet und über ein in Fig. 4 in Einzelheit dargestelltes tragendes Element 16 am Fahrgestellrahmen 2 des Nutzfahrzeuges, insbesondere Lastkraftwagen, befestigt.

Bei diesem Ausführungsbeispiel ist das tragende Element 16 erfindungsgemäß als einstückiges Winkelelement 18 gestaltet, mit Befestigungsbereichen für den Lufttrockner 4, den Trockenluftbehälter 6, das Vierkreisschutzventil 8 und für den Anschluss am Fahrgestellrahmen 2. Hierbei weist das Winkelelement 18 eine im Wesentlichen vertikal und senkrecht zum Fahrgestellrahmen 2 angeordnete Grundplatte 20 auf, welche im Wesentlichen Rechteckform besitzt. An diese Grundplatte 20 schließen sich mehrere abgewinkelte Seitenplatten 22, 24 und 26 mit den Befestigungsbereichen an.

Dabei sind die Seitenplatten 22 und 24 jeweils oben bzw. unten an der Grundplatte 20 angeordnet und weisen jeweils einen abgewinkelten Flansch 23 bzw. 25 mit Befestigungslöchern 30 bzw. 31 zur Befestigung des Elements 16 über Schrauben-Muttern-Verbindungen 40 (Fig. 2, 3) am Fahrgestellrahmen 2 auf. Die Seitenplatten 22 und 24 weisen Dreieckform auf und erstrecken sich nahezu über die gesamte Kantenlänge des entsprechenden Bereichs der Grundplatte 20.

Aus Fig. 1 bis 3 ist ersichtlich, dass der Lufttrockner 4 und der Trockenluftbehälter 6 beidseitig über in Fig. 4 dargestellte Befestigungslöcher 33 und 34 und entsprechende Schrauben-Muttern-Verbindungen an der Grundplatte 20 befestigt sind.

Zur Halterung des Vierkreisschutzventils 8 weist die Grundplatte 20 an der den Flanschen 23, 25 abgekehrten Seite die abgewinkelte Seitenplatte 26 auf, welche oben einen nach außen abgewinkelten Flansch 28 mit Befestigungslöchern 32 zur Befestigung des Vierkreisschutzventils 8 über Schrauben-Muttern-Verbindungen besitzt.

Zur Gewichtsminderung kann die Grundplatte 20 mindestens eine Ausnehmung 37, 38 - wie aus Fig. 4 gut ersichtlich - aufweisen.

Der Lufttrockner 4, der Trockenluftbehälter 6, das Vierkreisschutzventil 8, die elektropneumatischen Schalter 10, 11 und die Druckbegrenzungsventile 13 und 14 bilden mit dem tragenden Element 16 ein Gesamtmodul, welches über das tragende Element 16 am Fahrgestellrahmen 2 des sich in Pfeilrichtung I nach Fig. 3 bewegenden Nutzfahrzeuges zu befestigen ist. Die vorgenannte Einheit 1 ist komplett als Modul vormontierbar und kann dann in der Endmontage im vorgenannten Sinne am Fahrgestellrahmen 2 befestigt werden.

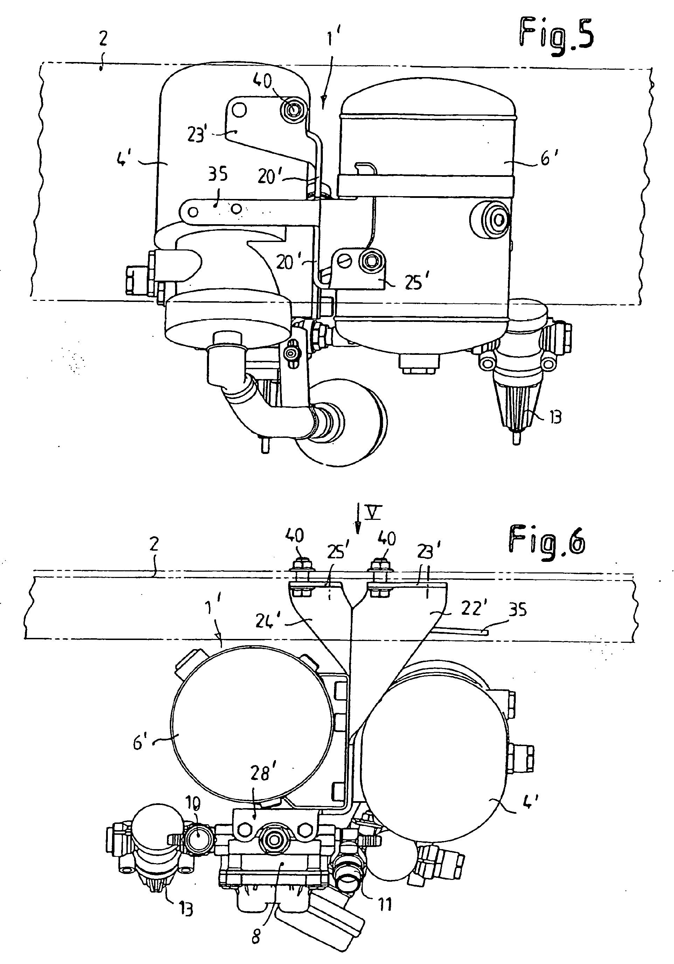

Die Fig. 5 bis 8 zeigen eine Variante der Lufttrocknereinheit 1' für zweiachsige Allrad-Nutzfahrzeuge, insbesondere Lastkraftwagen. Auch hier findet erfindungsgemäß ein einstückig ausgebildetes tragendes Element 16' in Form eines Winkelelements 18' Anwendung, welches eine vertikal und senkrecht zum Fahrgestellrahmen 2 angeordnete Grundplatte 20' aufweist, an der mehrere abgewinkelte Seitenplatten 22', 24' und 26' mit den Befestigungsbereichen vorgesehen sind.

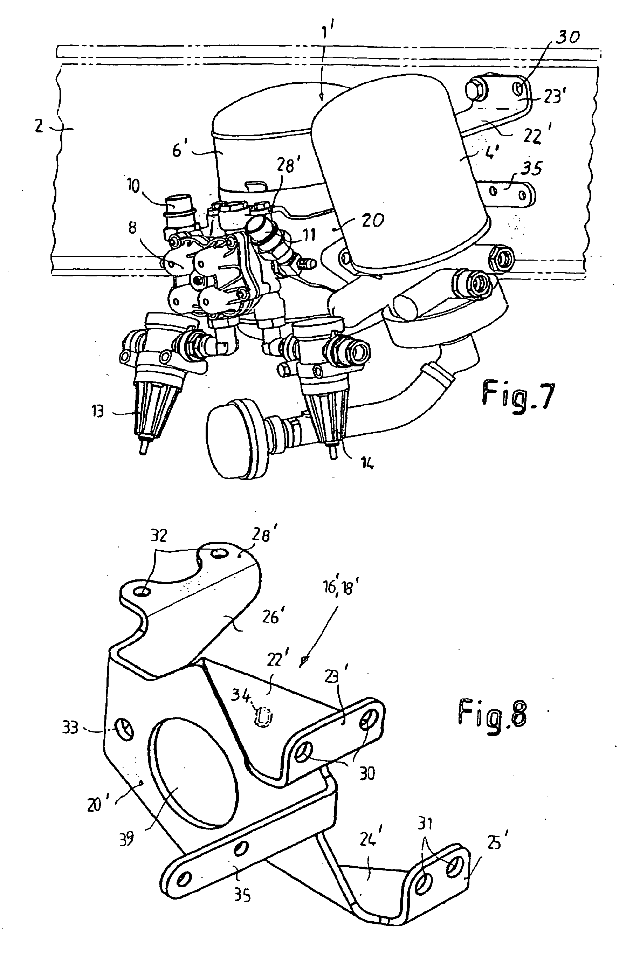

Die Seitenplatten 22', 24' und 26' sind analog den in den Fig. 1 bis 4 dargestellten Seitenplatten ausgebildet und weisen - wie gut aus Fig. 8 ersichtlich - auch hier jeweils einen abgewinkelten Flansch 23', 25' und 28' auf, um den Lufttrockner 4', den Trockenluftbehälter 6' und das Vierkreisschutzventil 8' mit den entsprechenden elektropneumatischen Schaltern und den Druckbegrenzungsventilen als Gesamtmodul zu lagern (Fig. 5-7).

Bei der Einzeldarstellung des Winkelelements 18' der Allrad-Variante der Lufttrocknereinheit 1' weist die Grundplatte 20' nach Fig. 5 und 8 einen zusätzlichen abgewinkelten Tragarm 35 zwischen den Flanschen 23' und 25' auf, welcher für eine weitere Ventilbefestigung vorgesehen und innen an der Grundplatte 20' abgewinkelt ist. Auch hier besitzt die Grundplatte 20' des Winkelelements 18' eine Ausnehmung 39 zur Gewichtsminderung.

Beiden Ausführungsbeispielen ist gemeinsam, dass die beiden elektropneumatischen Schalter 10 und 11 des Vierkreisschutzventils 8 bzw. 8' an diesem rechts und links befestigt sind, ebenso wie die beiden Druckbegrenzungsventile 13 und 14, und zwar über entsprechende Schrauben-Muttern-Verbindungen.

Beiden dargestellten Varianten der Lufttrocknereinheit 1' bzw. 1 ist gemeinsam, dass erfindungsgemäß - wie vorstehend ausgeführt - ein Gesamtmodul vorliegt, der über das als Winkelelement 18 bzw. 18' ausgebildete, einstückig gestaltete Element 16 bzw. 16' am Fahrgestellrahmen 2 befestigt werden kann. Die gesamte Einheit 1 bzw. 1' ist vormontierbar und kann beispielsweise mittels eines kleineren Hebezeugs von einer Montageperson an den Fahrgestellrahmen eines Lastkraftwagens herangeführt und dann dort befestigt werden.

## Patentansprüche

1. Lufttrocknereinheit (1, 1') als Teil einer Druckluftversorgungseinrichtung in einem Nutzfahrzeug, insbesondere Lastkraftwagen, mit einem am Fahrgestellrahmen (2) des Nutzfahrzeuges befestigten Lufttrockner (4, 4'), einem damit verbundenen Trockenluftbehälter (6, 6') und wenigstens einem Ventil (8, 8'), insbesondere Vierkreisschutzventil, mit mindestens einem elektrisch-pneumatischen Schalter (10, 11) und mindestens einem Druckbegrenzungsventil (13, 14), die als vormontiertes Gesamtmodul über ein einziges tragendes Element (16, 16') am Fahrgestellrahmen (2) befestigbar ist, **dadurch gekennzeichnet, dass** das tragende Element (16, 16') als einstückiges Winkelelement (18, 18') ausgebildet ist und eine im Wesentlichen vertikal und senkrecht zum Fahrgestellrahmen (2) stehende ebene Grundplatte (20, 20') aufweist, an welcher mehrere abgewinkelte Seitenplatten (22, 24, 26, 22', 24', 26') mit Befestigungsbereichen für den Lufttrockner (4, 4'), den Trockenluftbehälter (6, 6'), das Ventil (8, 8') und für den Anschluss am Fahrgestellrahmen (2) angeordnet sind.

2. Lufttrocknereinheit nach Anspruch 1, **dadurch gekennzeichnet, dass** an der Grundplatte (20, 20') im oberen und unteren Bereich jeweils eine abgewinkelte Seitenplatte (22, 24, 22', 24') angeordnet ist, welche wiederum einen abgewinkelten Flansch (23, 25. 23', 25') mit Befestigungslöchern (30, 31) zur Befestigung insbesondere über Schrauben-Muttern-Verbindungen (40) am Fahrgestellrahmen (2) aufweist.

3. Lufttrocknereinheit nach Anspruch 2, **dadurch gekennzeichnet, dass** der Lufttrockner (4, 4') und der Trockenluftbehälter (6, 6') beidseitig an der Grundplatte (20, 20') über Befestigungslöcher (33, 34) und insbesondere Schrauben-Muttern-Verbindungen befestigt sind.

4. Lufttrocknereinheit nach Anspruch 2, **dadurch gekennzeichnet, dass** die Grundplatte (20, 20') an der den Flanschen (23, 25, 23', 25') abgekehrten Seite eine Seitenplatte (26, 26') aufweist, mit einem Flansch (28, 28') und Befestigungslöchern (32) zur Befestigung des Ventils (8, 8') insbesondere über Schrauben-Muttern-Verbindungen.

5. Lufttrocknereinheit nach Anspruch 2, **dadurch gekennzeichnet, dass** die Grundplatte (20') zwischen den Flanschen (23', 25') einen zusätzlichen Tragarm (35) für eine weitere Ventilbefestigung aufweist.

6. Lufttrocknereinheit nach einem oder mehreren der vorhergehenden Ansprüche, **dadurch gekennzeichnet, dass** die Grundplatte (20, 20') mindestens eine Ausnehmung (37, 38, 39) zur Gewichtsminderung aufweist.

7. Lufttrocknereinheit nach einem oder mehreren der vorhergehenden Ansprüche, **dadurch gekennzeichnet, dass** die Grundplatte (20, 20') im Wesentlichen Rechteckform aufweist.

8. Lufttrocknereinheit nach Anspruch 7, **dadurch gekennzeichnet, dass** die Seitenplatten (22, 24, 26, 22', 23' 24') jeweils Dreiecksform aufweisen und sich nahezu über die gesamte Kantenlänge der entsprechenden Seite der Grundplatte (20, 20') erstrecken.

## Claims

1. Air-dryer unit (1, 1') as part of a compressed-air supply system in a commercial vehicle, particularly a truck, with an air dryer (4, 4') attached to the chassis frame (2) of the commercial vehicle, a dry-air reservoir (6, 6') connected to said air dryer (4, 4') and at least one valve (8, 8'), particularly a four-circuit protection valve, with at least one electro-pneumatic switch (10, 11) and at least one pressure-limiting valve (13, 14), which compressed-air supply system can be attached to the chassis frame (2) as a complete pre-assembled module via a single carrier element (16, 16'), **characterised in that** the carrier element (16, 16') is designed as a single-piece angle element (18, 18') and features a level base plate (20, 20') arranged essentially vertically and perpendicularly to the chassis frame (2), on which base plate (20, 20') several angled side plates (22, 24, 26, 22', 24', 26') with fastening areas for the air dryer (4, 4'), the dry-air reservoir (6, 6'), the valve (8, 8') and the connection to the chassis frame (2) are provided.

2. Air-dryer unit according to Claim 1, **characterised in that** the upper and lower areas of the base plate (20, 22') are each provided with an angled side plate (22, 24, 22', 24') which in turn features an angled flange (23, 25, 23', 25') with fastening holes (30, 31) for attachment to the chassis frame (2) particularly via bolt/nut connections (40).

3. Air-dryer unit according to Claim 2, **characterised in that** the air dryer (4, 4') and the dry-air reservoir (6, 6') are fastened on both sides to the base plate (20, 20') via fastening holes (33, 34) and particularly via bolt/nut connections.

4. Air-dryer unit according to Claim 2, **characterised in that** on the side facing away from the flanges (23, 25, 23', 25') the base plate (20, 20') features a side plate (26, 26') with a flange (28, 28') and fastening holes (32) for fastening the valve (8, 8'), particularly via bolt/nut connections.

5. Air-dryer unit according to Claim 2, **characterised in that** between the flanges (23', 25') the base plate (20') features an additional carrier arm (35) for fastening further valves.

6. Air-dryer unit according to one or several of the foregoing Claims, **characterised in that** the base plate (20, 20') features at least one cut-out (37, 38, 39) for weight reduction.

7. Air-dryer unit according to one or several of the foregoing Claims, **characterised in that** the base plate (20, 20') is of essentially rectangular design.

8. Air-dryer unit according to Claim 7, **characterised in that** the side plates (22, 24, 26, 22', 23', 24') are each of triangular design and extend virtually over the entire edge length of the corresponding side of said base plate (20, 20').

## Revendications

1. Unité de dessiccateur d'air (1, 1') en tant qu'élément constitutif d'un dispositif d'alimentation en air comprimé dans un véhicule industriel, en particulier un camion poids lourd, avec un dessiccateur d'air (4, 4') fixé sur le cadre de châssis (2) du véhicule industriel, un réservoir à air sec relié à celui-ci (6, 6') et au minimum une valve (8, 8'), en particulier une valve de protection à quatre circuits, avec au minimum un commutateur électropneumatique (10, 11) et au minimum une valve de limitation de pression (13, 14), unité pouvant être fixée, en tant que module complet pré-assemblé, à l'aide d'un seul et unique élément porteur (16, 16'), sur le cadre de châssis (2), **caractérisée en ce que** l'élément porteur (16, 16') est constitué d'un élément en équerre d'une seule pièce (18, 18') et comporte une plaque de montage plane (20, 20') fixée pour l'essentiel à la verticale et à l'horizontale par rapport au cadre de châssis (2), sur laquelle sont disposées plusieurs flasques latéraux pliés (22, 24, 26, 22', 24', 26') avec des possibilités de fixation pour le dessiccateur d'air (4, 4'), le réservoir à air sec (6, 6'), la valve (8, 8') et le raccordement sur le cadre de châssis (2).

2. Unité de dessiccateur d'air selon la revendication 1, **caractérisée en ce qu'**un flasque latéral plié (22, 24, 22', 24') est fixée respectivement sur la partie supérieure et inférieure de la plaque de montage (20, 20') et comporte une bride pliée (23, 25, 23', 25') avec des trous de fixation (30, 31) pour le fixer sur le cadre de châssis (2), en particulier, à l'aide de vis et d'écrous (40).

3. Unité de dessiccateur d'air selon la revendication 2, **caractérisée en ce que** le dessiccateur d'air (4, 4') et le réservoir à air sec (6, 6') sont fixés des deux côtés sur la plaque de montage (20, 20') à l'aide de trous de fixation (33, 34) et, en particulier, de vis et écrous.

4. Unité de dessiccateur d'air selon la revendication 2, **caractérisée en ce que** la plaque de montage (20, 20') présente sur le côté opposé aux brides (23, 25, 23', 25') un flasque latéral (26, 26') avec une bride (28, 28') et des trous de fixation (32) pour la fixation de la valve (8, 8'), en particulier à l'aide de vis et écrous.

5. Unité de dessiccateur d'air selon la revendication 2, **caractérisée en ce que** la plaque de montage (20') présente, entre les brides (23', 25'), un bras support supplémentaire (35) pour la fixation d'une valve supplémentaire.

6. Unité de dessiccateur d'air selon une ou plusieurs des revendications précédentes, **caractérisée en ce que** la plaque de montage (20, 20') présente au minimum un évidement (37, 38, 39) pour la réduction du poids.

7. Unité de dessiccateur d'air selon une ou plusieurs des revendications précédentes, **caractérisée en ce que** la plaque de montage (20, 20') possède pour l'essentiel une forme rectangulaire.

8. Unité de dessiccateur d'air selon la revendication 7, **caractérisée en ce que** les flasques latéraux (22, 24, 26, 22', 23', 24') possèdent respectivement une forme triangulaire et s'étendent pratiquement sur toute la longueur de l'arête du côté correspondant de la plaque de montage (20, 20').
